# EUROPEAN PATENT APPLICATION

(11) **EP 4 647 637 A1**
(43) Date of publication of application: **12.11.2025**
(21) Application number: 24857461.8
(22) Date of filing: 18.09.2024
(51) Int. Cl.: F16K 31/04

(54) **ELECTRIC VALVE**

(30) Priority: 22.03.2024 JP 2024046388
(71) Applicant: Fujikoki Corporation, Tokyo 158-0082 (JP)
(72) Inventor: YOSHIDA, Tatsuya, Tokyo 1580082 (JP); ARAI, Yusuke, Tokyo 1580082 (JP); HAYAKAWA, Junya, Tokyo 1580082 (JP); MATSUBARA, Yuta, Tokyo 1580082 (JP)
(74) Representative: Ter Meer Steinmeister & Partner
(86) International application number: PCT/JP2024/033251
(87) International publication number: WO 2025/197150

(57) **Abstract**

Provided is an electrically driven valve capable of improving a temperature adjustment efficiency by suppressing a refrigerant from flowing back while ensuring downsizing and reduced weight of the valve.

The electrically driven valve includes a valve main body including a first flow passage through which a refrigerant is introduced, a second flow passage through which the refrigerant is flown out, a third flow passage through which the refrigerant is passed, and a valve seat formed between the first flow passage and the second flow passage, a valve shaft unit including a valve element portion configured to be seated on the valve seat, a motor disposed on the valve main body, and a conversion mechanism configured to convert a rotation of a rotor of the motor into a linear movement and to transmit the same to the valve shaft unit, wherein the valve main body includes an insertion hole configured to connect the second flow passage and the third flow passage and to which the valve shaft unit is inserted, wherein communication between the third flow passage and the second flow passage is shut off by arranging a sleeve having a tubular shape in the insertion hole, and wherein the valve shaft unit is arranged in a displaceable manner in an axial direction on an inner side of the sleeve.

## Description

### [Technical Field]

The present invention relates to electrically driven valves.

### [Background Art]

In a refrigeration cycle adopted in air conditioning devices disposed in automobiles, for example, a thermosensitive temperature expansion valve designed to adjust an amount of passing of refrigerant according to temperature is used. In such a temperature expansion valve, a power element is conventionally adopted that drives a valve element using a pressure of a working gas sealed therein.

In general, power elements are useful in that they may control an opening and closing of valve of an expansion valve by sensing the temperature of a refrigerant through a simple mechanical structure, but in recent refrigeration cycles, there are demands for an opening/closing valve control having a greater degree of freedom, and for example, a forcible valve closing operation may become necessary regardless of the temperature of the refrigerant. A configuration has already been actually utilized in which an electromagnetic valve and an expansion valve are arranged in series within the refrigeration cycle, and a flow of the refrigerant passing through the expansion valve may be interrupted by a shut-off operation of the electromagnetic valve, but since the configuration uses two valve devices, the structure is increased in size.

In contrast, Patent Literature 1 discloses an electrically driven valve that is composed of an assembly of a valve unit and a passage body, and that may perform a valve opening and closing operation using a stepping motor of the valve unit. Such an electrically driven valve may be used as the expansion valve of a refrigeration cycle, and by communicating with an external device, the stepping motor may be operated regardless of the temperature of the refrigerant, and the valve element may be caused to come into contact with and separate from a valve seat of the passage body arbitrarily.

### [Citation List]

### [Patent Literature]

[PTL 1] Japanese Patent application Laid-Open Publication No. 2023-53708

### [Summary of Invention]

### [Technical Problem]

In an electrically driven valve including a valve main body having a first flow passage through which a refrigerant is introduced, a second flow passage through which the refrigerant is flown out, a third flow passage through which the refrigerant discharged from the second flow passage is passed, and a valve seat formed between the first flow passage and the second flow passage, a configuration is considered in which a valve element portion of a valve shaft is seated on the valve seat through the third flow passage.

However, in such an electrically driven valve, the valve shaft is inserted between the third flow passage and the second flow passage, such that the refrigerant may flow back from the third flow passage into the second flow passage, and a temperature adjustment efficiency thereof may be deteriorated.

The present invention aims at providing an electrically driven valve capable of suppressing backflow of the refrigerant and improving the temperature adjustment efficiency of the electrically driven valve, while ensuring downsizing and reduced weight of the valve.

### [Solution to Problem]

In order to achieve the objects described above, an electrically driven valve according to the present invention includes:
a valve main body including a first flow passage through which a refrigerant is introduced, a second flow passage through which the refrigerant is flown out, a third flow passage through which the refrigerant is passed, and a valve seat formed between the first flow passage and the second flow passage;
a valve shaft unit including a valve element portion configured to be seated on the valve seat;
a motor disposed on the valve main body; and
a conversion mechanism configured to convert a rotation of a rotor of the motor into a linear movement and to transmit the same to the valve shaft unit,
wherein the valve main body includes an insertion hole configured to connect the second flow passage and the third flow passage and to which the valve shaft unit is inserted,
wherein communication between the third flow passage and the second flow passage is shut off by arranging a sleeve having a tubular shape in the insertion hole, and
wherein the valve shaft unit is arranged in a displaceable manner in an axial direction on an inner side of the sleeve.

### [Advantageous Effects of Invention]

The present invention enables to provide an electrically driven valve that may suppress backflow of the refrigerant and improve the temperature adjustment efficiency of the electrically driven valve, while ensuring downsizing and reduced weight of the valve.

### [Brief Description of Drawings]

[FIG. 1] FIG. 1 is a vertical cross-sectional view of an electrically driven valve according to a first embodiment.
[FIG. 2] FIG. 2 is a vertical cross-sectional view of a sleeve.
[FIG. 3] FIG. 3 is a view showing portion A of FIG. 1 in enlarged view.
[FIG. 4] FIG. 4 is a vertical cross-sectional view illustrating a circumference of a motor unit.
[FIG. 5] FIG. 5 is a vertical cross-sectional view of an electrically driven valve according to a second embodiment.
[FIG. 6] FIG. 6 is a vertical cross-sectional view of an electrically driven valve according to a third embodiment.
[FIG. 7] FIG. 7 is a planar view of a B-B cross-section of FIG. 6.
[FIG. 8] FIG. 8 is a vertical cross-sectional view of an electrically driven valve according to a fourth embodiment.
[FIG. 9] FIG. 9 is a vertical cross-sectional view of an electrically driven valve according to a fifth embodiment.

### [Description of Embodiments]

Embodiments of the present invention will be described below with reference to the drawings.

### (Definition of Direction)

In the present specification, a direction from a valve seat 20 toward a motor unit 100 is defined as an "upward direction", and in contrast, a direction from the motor unit 100 toward the valve seat 20 is defined as a "downward direction". An axis of an electrically driven valve 1 is denoted as L.

### (First Embodiment)

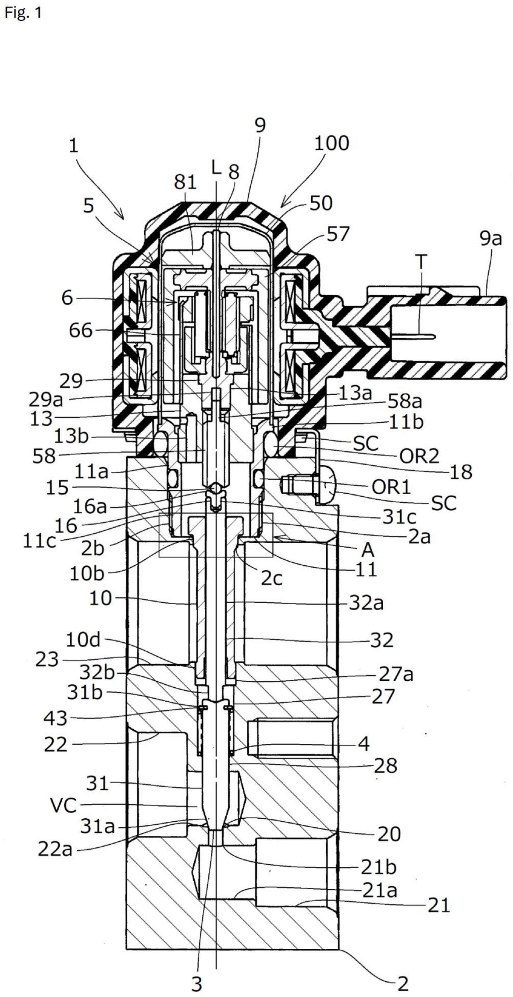

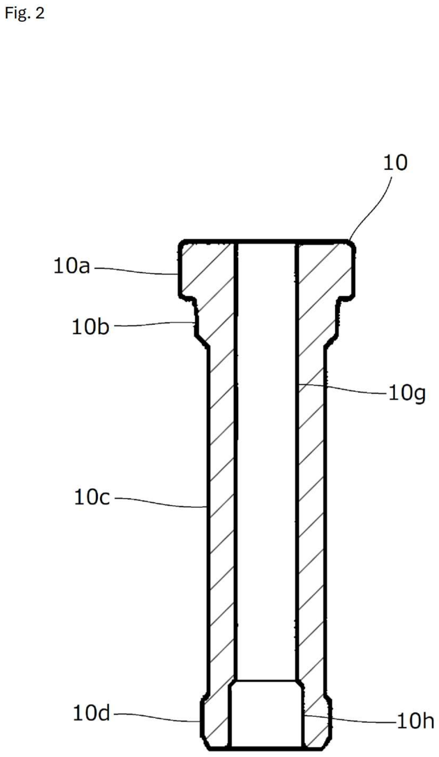

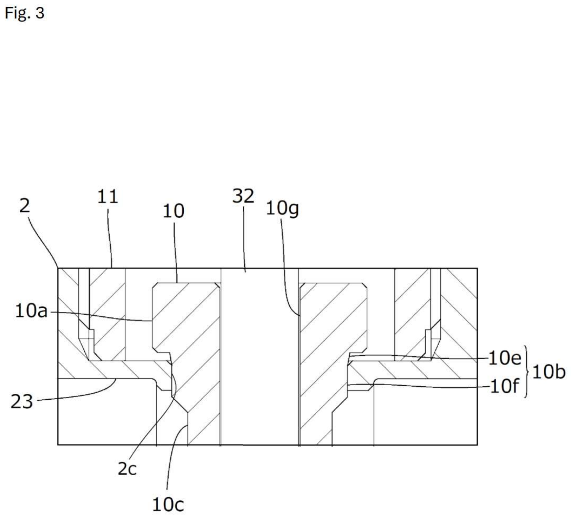

FIG. 1 is a vertical cross-sectional view of the electrically driven valve 1 according to the present embodiment, which illustrates a valve closed state. FIG. 2 is a vertical cross-sectional view of a sleeve. FIG. 3 is a view illustrating portion A of FIG. 1 in enlarged view.

In FIG. 1, the electrically driven valve 1 includes a valve main body 2, a valve shaft unit 3, a sleeve 10 having an approximately cylindrical shape, and the motor unit 100.

The valve main body 2 includes a first flow passage 21, a second flow passage 22, a first connection passage 21a, an orifice passage 21b, a second connection passage 22a, and a return flow passage, i.e., third flow passage, 23. The first flow passage 21 and the first connection passage 21a are each extended orthogonally with respect to the axis L, and an inner diameter of the first flow passage 21 is greater than an inner diameter of the first connection passage 21a. Further, the second flow passage 22 and the second connection passage 22a are each extended orthogonally with respect to the axis L at an opposite side from the first flow passage 21 of the valve main body 2, and an inner diameter of the second flow passage 22 is greater than an inner diameter of the second connection passage 22a.

The orifice passage 21b extends along the axis L, with a lower end thereof communicated with a vicinity of an end of the first connection passage 21a, and an upper end thereof communicated with a vicinity of an end of the second connection passage 22a. An interior of the second connection passage 22a constitutes a valve chamber VC, and the upper end of the orifice passage 21b constitutes the valve seat 20. The return flow passage 23 extends in a direction intersecting the axis L between the motor unit 100 and the second flow passage 22. A recessed portion 2a is formed at an upper end of the valve main body 2, and a through hole 2c having a cylindrical shape formed at a bottom portion of the recessed portion 2a communicates with the return flow passage 23. The recessed portion 2a is a recessed portion for attaching a rotor assembly including a motor.

The first flow passage 21 is a supply-side flow passage connected to a condenser (not shown) of the refrigeration cycle, and a high-pressure refrigerant is supplied to the orifice passage 21b through the supply-side flow passage. The second flow passage 22 is a discharge-side flow passage, and fluid within the valve chamber VC is discharged to an evaporator (not shown) outside the electrically driven valve through the discharge-side flow passage. A refrigerant having passed through the evaporator is introduced to the return flow passage 23.

In the valve main body 2, a valve shaft insertion hole 28 is formed upward from the second connection passage 22a along the axis L, receiving the valve shaft unit 3 to fit slidably therein, and has a function to guide the valve shaft unit 3. In other words, a gap, or passage, that allows a sliding movement is formed between an inner circumference surface of the valve shaft insertion hole 28 and an outer circumference surface of a lower valve shaft 31 of the valve shaft unit 3.

Further, an annular hole portion, i.e., insertion hole, 27 formed on an upper portion of the valve shaft insertion hole 28 and communicated with the return flow passage 23 has a greater diameter than the valve shaft insertion hole 28 and has a function to accommodate a coil spring 4. A fitting portion 27a is formed on an inner circumference of the annular hole portion 27 that intersects the return flow passage 23. The inner diameter of the fitting portion 27a is preferably greater than the inner diameter of the annular hole portion 27. Further, the return flow passage 23 preferably has an inner diameter that is narrowed in the vicinity of the through hole 2c and the fitting portion 27a.

According to the above-described configuration, the second connection passage 22a and the annular hole portion 27 allow the refrigerant to be communicated movably therebetween through a gap formed between the valve shaft insertion hole 28 and the lower valve shaft 31.

The valve shaft unit 3 includes the lower valve shaft 31 and an upper valve shaft 32 arranged along the axis L, and when the valve of the electrically driven valve 1 is opened and closed, the lower valve shaft 31 and the upper valve shaft 32 move integrally in upward and downward directions. The lower valve shaft 31 passes through the valve chamber VC and the valve shaft insertion hole 28, and has its upper end arranged within the annular hole portion 27. A valve element portion 31a having a conical shape that is reduced in diameter toward a downward direction is formed at a lower end of the lower valve shaft 31.

As illustrated in FIG. 1, in a state where the valve element portion 31a is seated on the valve seat 20 of the valve main body 2, the flow of refrigerant in the orifice passage 21b is regulated. This state is referred to as a non-communicated state. However, it may be possible to allow a limited amount of refrigerant to flow even when the valve element portion 31a is seated on the valve seat 20. Meanwhile, in a state where the valve element portion 31a is separated from the valve seat 20, the flow of refrigerant passing through the orifice passage 21b is increased. This state is referred to as a communicated state.

The lower valve shaft 31 includes a circumferential groove 31b within the annular hole portion 27. A plate having a C-shape in the axis L direction, referred to as a retaining ring, 43 is fit and arranged in the circumferential groove 31b. The coil spring 4 arranged between the retaining ring 43 and a bottom wall of the annular hole portion 27 urges the lower valve shaft 31 upward through the retaining ring 43.

The upper valve shaft 32 is formed by consecutively connecting a large diameter portion 32a and a small diameter portion 32b, wherein a spherical surface portion formed at a lower end of the small diameter portion 32b comes into contact with a tapered surface formed on an upper end of the lower valve shaft 31. Axial center alignment may be performed by having the tapered surface that is reduced in diameter toward the downward direction and the spherical surface portion abut against one another. The large diameter portion 32a of the upper valve shaft 32 fits slidably in the inner circumference of the sleeve 10, and the small diameter portion 32b protrudes from the lower end of the sleeve 10. The sleeve 10 is preferably formed of resin such as PPS (polyphenylene sulfide) that is not easily swelled and that has a low thermal conductivity, but it may also be made of metal.

In FIG. 2, an upper large diameter portion 10a having a cylindrical shape, a medium diameter portion 10b having a smaller diameter than the upper large diameter portion 10a, a small diameter portion 10c having a cylindrical shape and having a smaller diameter than the medium diameter portion 10b, and a lower large diameter portion 10d having a greater diameter than the small diameter portion 10c and a smaller diameter than the medium diameter portion 10b are formed on the outer circumference of the sleeve 10.

As illustrated in FIG. 3, the medium diameter portion 10b includes a first outer circumference surface 10e that is reduced in diameter toward the downward direction, and a second outer circumference surface 10f having a cylindrical shape connected to the lower end of the first outer circumference surface 10e.

In FIG. 2, a first inner circumference surface 10g having a cylindrical shape, and a second inner circumference surface 10h having a cylindrical shape connected to a lower end of the first inner circumference surface 10g are formed on the inner circumference of the sleeve 10. The first inner circumference surface 10g and the upper valve shaft 32 are fit slidably against each other. In other words, a gap, i.e., passage, having enough size to allow a sliding movement is formed between the first inner circumference surface 10g and the outer circumference surface of the upper valve shaft 32. Refrigerant will be communicated between the annular hole portion 27 and an interior of a holder 11 through this gap.

### (Configuration of Motor Unit)

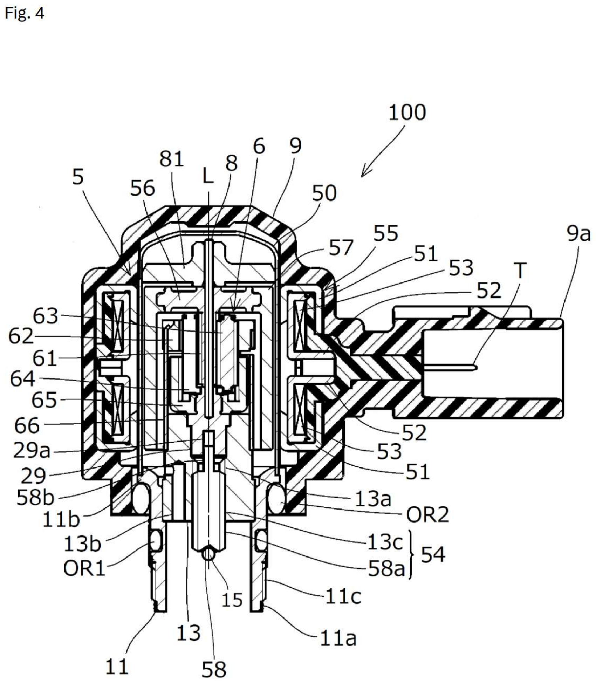

FIG. 4 is a vertical cross-sectional view illustrating a circumference of the motor unit 100. The motor unit 100 will be described with reference to FIG. 4. The motor unit 100 is composed of a can 50 having a cylindrical shape with a top that is fixed to the valve main body 2 through the holder 11 having a cylindrical shape, a stator 55 externally fit to the can 50, a rotor 57 disposed inside the can 50, a cover 9 having an approximately tubular shape with a top that covers the circumference of the stator 55, a gear-type deceleration mechanism 6 that decelerates the rotation of the rotor 57 and transmits the same, a screw drive member, also referred to as a drive member, 58 that converts a rotary movement of an output gear of the deceleration mechanism 6 through a screw feeding mechanism 54 to a linear movement and transmits the same to the valve shaft unit 3, and a ball 15 welded to a lower end of the screw drive member.

The can 50 refers to a member having a tubular portion that is attached to the valve main body 2 side of the electrically driven valve 1 such that an interior thereof is sealed, the can 50 including a tubular portion with a bottom. The can 50 accommodates the rotor 57, the deceleration mechanism 6, and the screw feeding mechanism 54. More accurately, a portion of the screw feeding mechanism 54 is accommodated in the can 50, and the entirety of the screw feeding mechanism 54 is accommodated in a connecting body between the can 50 and the holder 11.

A stepping motor 5 includes the rotor 57 that is arranged rotatably with respect to the can 50 in an interior of the can 50, and that has a rotor supporting member 56 fixed to an inner side on an upper portion thereof. In the present description, the stepping motor 5 is composed only of the rotor 57, and does not include the stator 55. The stator 55 composed of a yoke 51, a bobbin 52, and a coil 53 is fit and secured to an outer side of the can 50, and is covered by the cover 9 made of resin. The cover 9 includes a connector portion 9a. The connector portion 9a is formed along the axis of the return flow passage 23, and in the interior thereof is disposed a terminal T connected to a stepping motor-driving circuit board (not shown).

In FIG. 1, the holder 11 is formed by consecutively connecting a main body 11a having a tubular shape, and a flange portion 11b extended outward in a radial direction from an upper end of the main body 11a and joined to a lower end of the can 50. A male screw 11c is formed at an outer circumference of a lower portion of the main body 11a. By engaging the male screw 11c to a female screw 2b formed on an inner circumference of the recessed portion 2a of the valve main body 2, the can 50 is fixed through the holder 11 to the valve main body 2. A space between the main body 11a and the recessed portion 2a is sealed by an O-ring OR1. Therefore, the interior of the connecting body of the can 50 and the holder 11 may communicate with the exterior of the connecting body only through the through hole 2c of the valve main body 2.

A screw bearing member 13 is fit by press-fitting to an inner circumference of the upper portion of the holder 11. The screw bearing member 13 includes a through hole 13a that extends along the axis L, and a communication hole 13b that extends in parallel with the axis L from the lower end of the screw bearing member 13 and that opens at the outer circumference. The communication hole 13b has a function to introduce the refrigerant that flows through the through hole 2c to the lower side of the screw bearing member 13 into the can 50. A thin wall tubular body 66 is fixed to the outer circumference at the upper end of the screw bearing member 13. Further, an output shaft portion 29 having a stepped cylindrical shape is rotatably fit to the upper portion of the through hole 13a of the screw bearing member 13.

In FIG. 4, the deceleration mechanism 6 includes, on the inner circumference side of the rotor 57, a sun gear 61 formed integrally with the rotor supporting member 56, a fixing ring gear 62 fixed to the valve main body 2 via the thin wall tubular body 66, a planetary gear 63 arranged between and meshed respectively with the sun gear 61 and the fixing ring gear 62, a carrier 64 rotatably supporting the planetary gear 63, and an output gear member 65 having a tubular shape with a bottom and having teeth that mesh with the planetary gear 63 provided on an inner circumference thereof, by which a magical planetary gear deceleration mechanism is composed. The number of teeth of the fixing ring gear 62 is set to differ from the number of teeth of the output gear member 65.

An axial member 8 passes through and rotatably retains the rotor supporting member 56 and the sun gear 61, and an upper end of the axial member 8 is supported by a supporting member 81 arranged on an inner side of a top portion of the can 50.

An upper portion of the output shaft portion 29 is press-fit to a center opening at a bottom portion of the output gear member 65, and a lower end of the axial member 8 is rotatably fit to an opening at the upper portion of the output shaft portion 29.

A male screw portion 58a formed at a lower portion of a screw drive member 58 is engaged to a female screw portion 13c formed at a lower portion of the through hole 13a of the screw bearing member 13. A rotary movement of the output gear member 65, i.e., decelerated rotary movement of the rotor 57, is converted into a linear movement along the axis L by a screw feeding mechanism, i.e., conversion mechanism, 54 composed of the male screw portion 58a and the female screw portion 13c.

A slit 29a is formed at a lower end of the output shaft portion 29, and a blade 58b that protrudes along the axis L is formed at an upper end of the screw drive member 58, wherein the slit 29a and the blade 58b mutually slidably engage with each other. Thereby, the output shaft portion 29 is connected in an integrally rotatable manner to the screw drive member 58, and when the output gear member 65, i.e., the rotor 57, rotates, the output shaft portion 29 and the screw drive member 58 rotate integrally, and they are also relatively movable in linear movement along the axis L.

In FIG. 1, the ball 15 made of metal is coaxially welded to a lower end of the screw drive member 58. Meanwhile, a circular hole 31c is formed to an upper end of the upper valve shaft 32 of the valve shaft unit 3, and a ball seat 16 made of metal is press-fit to the circular hole 31c. An upper end surface 16a having an increased diameter of the ball seat 16 is formed to have a spherical curved surface, more specifically, a shape in which a cone and a spherical surface are combined, and slidably holds the ball 15.

### (Assembly of Electrically Driven Valve)

An assembling process of the electrically driven valve 1 will be described. At first, the retaining ring 43 is assembled to the lower valve shaft 31. Further, in a state where the rotor 57 and the deceleration mechanism 6 are assembled to the inner side of the can 50, a rotary assembly in which the holder 11 is fixed to the lower end of the can 50 is prepared.

The coil spring 4 is inserted from above to the annular hole portion 27 of the valve main body 2 to which machining has been provided, and thereafter, the lower valve shaft 31 is passed through from above to the through hole 2c of the recessed portion 2a and the inner side of the coil spring 4 and inserted to the valve shaft insertion hole 28. In this state, the upper end of the coil spring 4 abuts against a lower surface of the retaining ring 43.

Thereafter, the sleeve 10 is passed through the through hole 2c from the lower end side, the lower large diameter portion 10d is press-fit to the fitting portion 27a, and the medium diameter portion 10b is arranged within the through hole 2c, such that the sleeve 10 is pushed downward with respect to the valve main body 2. Thereby, as illustrated in FIG. 3, press-fitting is realized by having the first outer circumference surface 10e of the sleeve 10 dig (bite) to the inner circumference surface of the through hole 2c by a so-called wedge effect, by which a seal between the sleeve 10 and the through hole 2c is ensured, such that the entry of refrigerant from the return flow passage 23 may be shut off.

Further, by having the lower large diameter portion 10d and the fitting portion 27a press-fit with each other, a seal between the return flow passage 23 and the annular hole portion 27 is ensured, such that the entry of refrigerant from the return flow passage 23 may be shut off. In this state, by being press-fit to the fitting portion 27a, the lower large diameter portion 10d is compressed inward in the radial direction, such that the inner diameter of the lower large diameter portion 10d is reduced in diameter. According to the present embodiment, the second inner circumference surface 10h which is increased in diameter than the first inner circumference surface 10g is formed at the lower end side of the sleeve 10, such that even if the lower large diameter portion 10d is compressed inward in the radial direction, the second inner circumference surface 10h which is the inner circumference thereof will not interfere with the upper valve shaft 32, and will not obstruct the sliding movement of the upper valve shaft 32. In order to ensure such a function, the length of the second inner circumference surface 10h from the lower end is preferably longer than the press-fit length of the fitting portion 27a of the sleeve 10.

After attaching the sleeve 10 to the valve main body 2 as described above, the upper valve shaft 32 in which the ball seat 16 is press-fit to the upper end is inserted to the sleeve 10, and the lower end thereof is abutted against the upper end of the lower valve shaft 31.

Thereafter, the O-ring OR1 is arranged at an outer circumferential groove of the main body 11a of the holder 11, an O-ring OR2 is arranged at a circumference of an opening end of the recessed portion 2a, the holder 11 is fit to the recessed portion 2a, the male screw 11c is engaged to the female screw 2b, and the rotor assembly is attached to the valve main body 2. In this state, the O-ring OR1 exerts a sealing mechanism between the main body 11a of the holder 11 and the recessed portion 2a. The flange portion 11b prevents the O-ring OR2 from falling off. The O-ring OR2 may be arranged on the holder 11 before engaging the holder 11 to the valve main body 2, or the O-ring OR2 may be assembled after engaging the holder 11 to the valve main body 2 by inserting the same from the upper portion of the can.

By assembling the rotor assembly to the valve main body 2, the ball 15 welded to the lower end of the screw drive member 58 is seated on the upper end of the ball seat 16.

From this state, the cover 9 is moved from above toward the can 50 together with the stator 55, and covers the can 50. By having the lower end of the cover 9 arranged on the upper surface side of the valve main body 2, the O-ring OR2 is arranged between the cover 9 and the holder 11, and provides a seal between the both members. A plate-shaped stay 18 is arranged astride the lower end of the cover 9 and the side wall of the valve main body 2, and the both members are fixed by a screw SC. By connecting the connector portion 9a of the cover 9 to a connector not shown, an external control device and a circuit board of the electrically driven valve 1 are connected in a manner capable of transmitting signals therebetween via the terminal T.

### (Operation of Electrically Driven Valve)

In a state where the rotor 57 of the stepping motor 5 is driven to rotate in one direction by feeding a valve close control signal with a predetermined number of pulses from the external control device to the stator 55, a rotation is entered from the sun gear 61 to the deceleration mechanism 6, and further, the rotation decelerated by the deceleration mechanism 6 is transmitted through the output shaft portion 29 to the screw drive member 58. In a state where the screw drive member 58 is rotated in one direction, the female screw portion 13c and the male screw portion 58a are relatively moved in a screw motion, and according to the rotation thereof, the screw drive member 58 is moved downward in the axis L direction.

In a state where the screw drive member 58 descends while rotating together with the ball 15, the valve shaft unit 3 is urged downward via the ball seat 16 while causing rotational sliding movement between the ball 15 and the upper end surface 16a of the ball seat 16, such that the valve shaft unit 3 descends against the urging force of the coil spring 4, and the valve element portion 31a seats on the valve seat 20 to realize a valve closed state. Thereby, the refrigerant that has been introduced into the first flow passage 21 from a condenser not shown may not enter the valve chamber VC through the orifice passage 21b, and the flow of refrigerant is interrupted between the first flow passage 21 and the second flow passage 22.

Meanwhile, in a state where the rotor 57 of the stepping motor 5 is driven to rotate in the other direction by feeding a valve open control signal from a control device not shown to the stator 55, the screw drive member 58 is moved upward in the axis L direction via the deceleration mechanism 6 and the screw feeding mechanism 54. Thereby, a driving force that urges the valve shaft unit 3 downward is eliminated, and the valve shaft unit 3 is ascended according to the urging force of the coil spring 4. When the valve shaft unit 3 is ascended, the valve element portion 31a is separated from the valve seat 20 and realizes a valve opened state. Thereby, refrigerant enters the valve chamber VC from the first flow passage 21 through the first connection passage 21a and the orifice passage 21b, and further, refrigerant is flown out to the exterior of the electrically driven valve 1 through the second connection passage 22a and the second flow passage 22. For example, the valve open control signal fed to the stator 55 is determined according to a signal from a temperature sensor attached to an outlet-side piping of the evaporator, based on which the amount of refrigerant passing through the orifice passage 21b during the valve opening and closing operation and while the valve is opened is controlled.

The refrigerant having been discharged from the second flow passage 22 passes through the evaporator not shown, enters the return flow passage 23 of the electrically driven valve 1 in a relatively low-pressure state, then flows out of the electrically driven valve 1 to reach a compressor not shown, and compressed as needed to be supplied to the condenser.

According to the present embodiment, communication of the annular hole portion 27 communicated with the second connection passage 22a with the return flow passage 23 is blocked by the lower large diameter portion 10d of the sleeve 10, such that refrigerant will not flow through the return flow passage 23 into the annular hole portion 27, by which the refrigerant is suppressed from flowing back, such that the temperature adjustment efficiency of the electrically driven valve may be enhanced.

Further according to the present embodiment, the second connection passage 22a which is on the downstream side of the valve seat 20 and the inner side space of the can 50 are communicated through the gap between the first inner circumference surface 10g of the sleeve 10 and the outer circumference surface of the upper valve shaft 32, the annular hole portion 27, and the gap between the valve shaft insertion hole 28 and the lower valve shaft 31. Therefore, liquid refrigerant prior to being subjected to heat exchange within the evaporator may be supplied into the can 50 through the above-mentioned gap and space, and lubrication of the deceleration mechanism 6 may be performed by the oil mixed into the refrigerant.

Further, the present embodiment realizes a so-called regular flow in which the orifice passage 21b side is of high pressure and the valve chamber VC side is of low pressure interposing the valve seat 20, such that pressure in the valve opening direction constantly acts on the valve element portion 31a. However, the deceleration mechanism 6 having a high deceleration ratio is arranged between the stepping motor 5 and the valve shaft unit 3, such that regardless of the pressure applied on the valve element portion 31a, position control of the valve element portion 31a may be realized infallibly in both the valve closed state and the valve opened state. However, even in the case of a so-called reverse flow in which the orifice passage 21b side is of low pressure and the valve chamber VC side is of high pressure interposing the valve seat 20, the electrically driven valve 1 according to the present embodiment may be adopted. In that case, refrigerant from the condenser is introduced to the second flow passage 22, and refrigerant flows out from the first flow passage 21 toward the evaporator, but similarly, the refrigerant is suppressed from flowing back between the return flow passage 23 and the second flow passage 22.

According to the present embodiment, the shape of the valve main body 2 is approximately the same as the shape of the valve main body of a conventional expansion valve having a power element, such that in the refrigeration cycle that is already used, the valve may be replaced with the electrically driven valve according to the present embodiment without any major design modifications.

### (Second Embodiment)

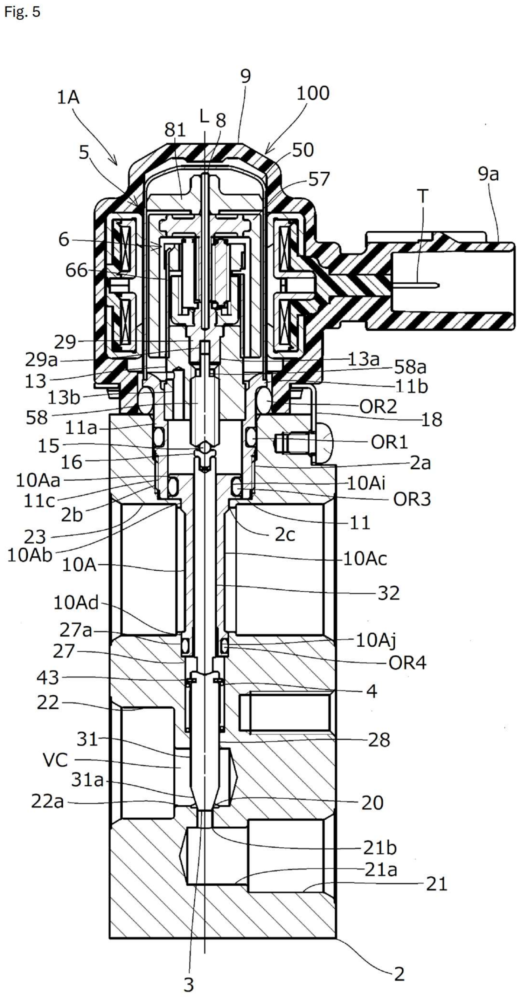

FIG. 5 is a vertical cross-sectional view of an electrically driven valve 1A according to the second embodiment in a valve closed state. According to the present embodiment, only a sleeve 10A differs from the embodiment described above, and other components are similar, such that they are denoted with the same reference numbers, and descriptions thereof are omitted.

An upper large diameter portion 10Aa of the sleeve 10A includes an upper circumferential groove, i.e., second circumferential groove, 10Ai, and a lower large diameter portion 10Ad includes a lower circumferential groove, first circumferential groove, 10Aj. An O-ring, i.e., sealing member, OR3 is arranged in the upper circumferential groove 10Ai, sealing the space between the upper large diameter portion 10Aa and the inner circumference of the main body 11a of the holder 11, and an O-ring, i.e., sealing member, OR4 is arranged in the lower circumferential groove 10Aj, sealing the space between the lower large diameter portion 10Ad and the inner circumference surface of the fitting portion 27a. A medium diameter portion 10Ab and a small diameter portion 10Ac adopt simple cylindrical shapes.

According to the present embodiment, there is no need to press-fit the medium diameter portion 10Ab to the through hole 2c, and even if a gap is formed therebetween, the seal between the upper large diameter portion 10Aa and the inner circumference surface of the holder 11 may be ensured by the O-ring OR3.

Further, even if the lower large diameter portion 10Ad is simply inserted without being press-fit to the fitting portion 27a, the seal between the lower large diameter portion 10Ad and the fitting portion 27a may be ensured by the O-ring OR4. As described above, there is no need for a equipment for press-fitting the sleeve 10A when assembling the electrically driven valve 1, and the fabrication property may be enhanced.

### (Third Embodiment)

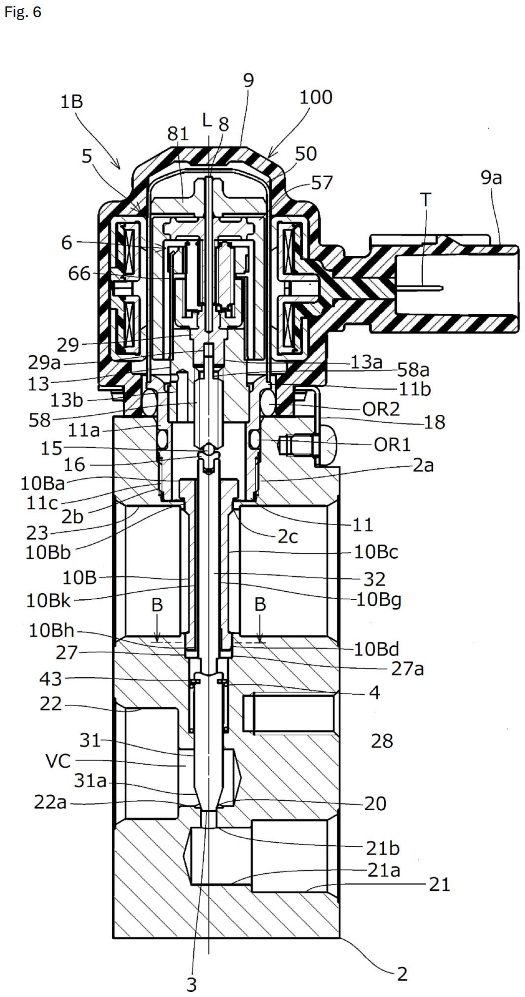

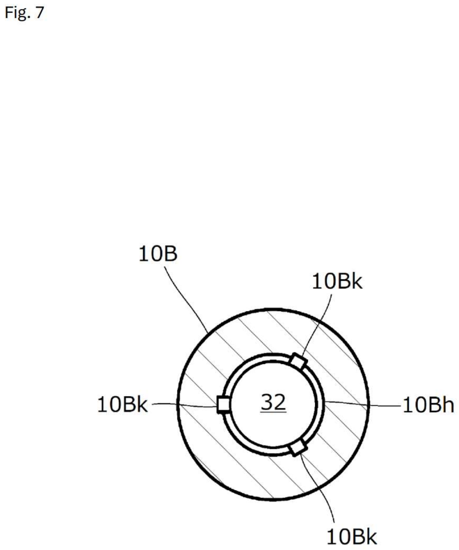

FIG. 6 is a vertical cross-sectional view of an electrically driven valve 1B according to a third embodiment in a valve closed state. FIG. 7 is a planar view of a B-B cross-section of FIG. 6. According to the present embodiment, only a sleeve 10B differs from the first embodiment, and other components are similar, such that they are denoted with the same reference numbers, and descriptions thereof are omitted.

The sleeve 10B has an inner circumference surface shape that differs from the first embodiment. Specifically, the sleeve 10B has formed on its inner circumference surface a plurality of, which according to this embodiment is three, axial direction grooves 10Bk at even intervals in the circumferential direction across a first inner circumference surface 10Bg and a second inner circumference surface 10Bh. The axial direction grooves 10Bk have a rectangular cross-sectional shape, but they may also have a semicircular shape. The shapes of the outer circumference surfaces of the sleeve 10B, i.e., an upper large diameter portion 10Ba, a medium diameter portion 10Bb, a small diameter portion 10Bc, and a lower large diameter portion 10Bd, are similar to the first embodiment.

According to the present embodiment, when the sleeve 10B is assembled to the valve main body 2, the axial direction grooves 10Bk serving as a passage through which refrigerant may pass is formed, in addition to the gap between the inner and outer circumference surfaces, between the upper valve shaft 32 and the first inner circumference surface 10Bg. Thereby, the amount of refrigerant supplied to the interior of the can 50 through the fitting portion 27a may be increased.

Instead of forming axial direction grooves on the sleeve 10B, axial direction grooves may be formed on the outer circumference surface of the upper valve shaft 32. Alternatively, spiral grooves through which refrigerant may pass may be formed on at least one of the inner circumference surface of the sleeve 10B and the outer circumference surface of the upper valve shaft 32, or a concave-convex structure through which refrigerant may pass may be formed on at least one of the above surfaces, instead of the axial direction grooves.

### (Fourth Embodiment)

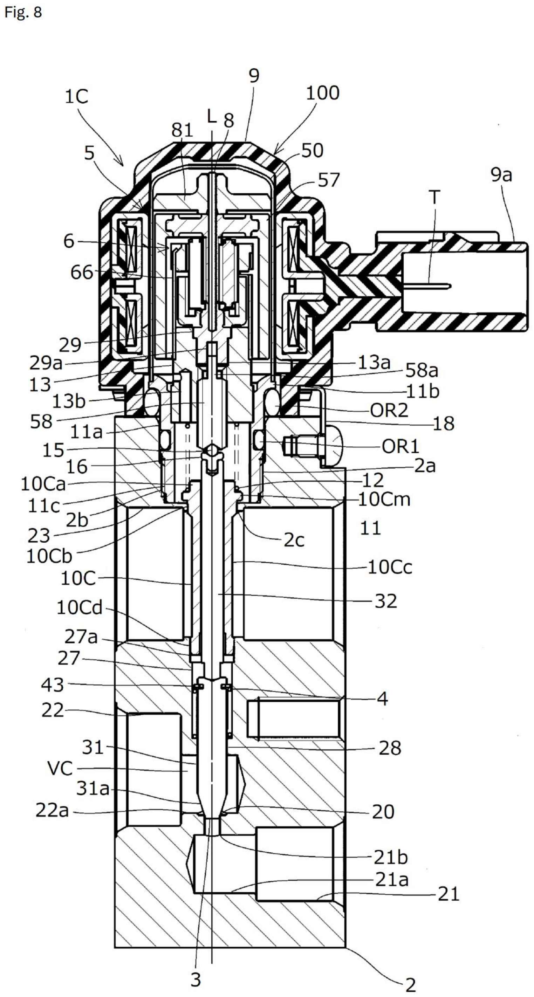

FIG. 8 is a vertical cross-sectional view of an electrically driven valve 1C according to a fourth embodiment in a valve closed state. According to the present embodiment, only the point that a compression coil spring 12 is disposed and a configuration of a sleeve 10C differ from the first embodiment, and other components are similar, such that they are denoted with the same reference numbers, and descriptions thereof are omitted.

The sleeve 10C has an outer circumference surface shape that differs from the first embodiment. More specifically, a flange portion 10Cm that protrudes toward an outer side in a radial direction is formed on an upper large diameter portion 10Ca. In the sleeve 10C, a medium diameter portion 10Cb, a small-diameter portion 10Cc, a lower large diameter portion 10Cd, and the inner circumference surface are similar to the first embodiment.

A compression coil spring, i.e., elastic body, 12 is disposed on the inner side of the holder 11 between the flange portion 10Cm and the lower surface of the screw bearing member 13, which urges the sleeve 10C downward with respect to the screw bearing member 13, and thereby, the wedge effect acting on the first outer circumference surface 10e (FIG. 4) and the through hole 2c is enhanced.

### (Fifth Embodiment)

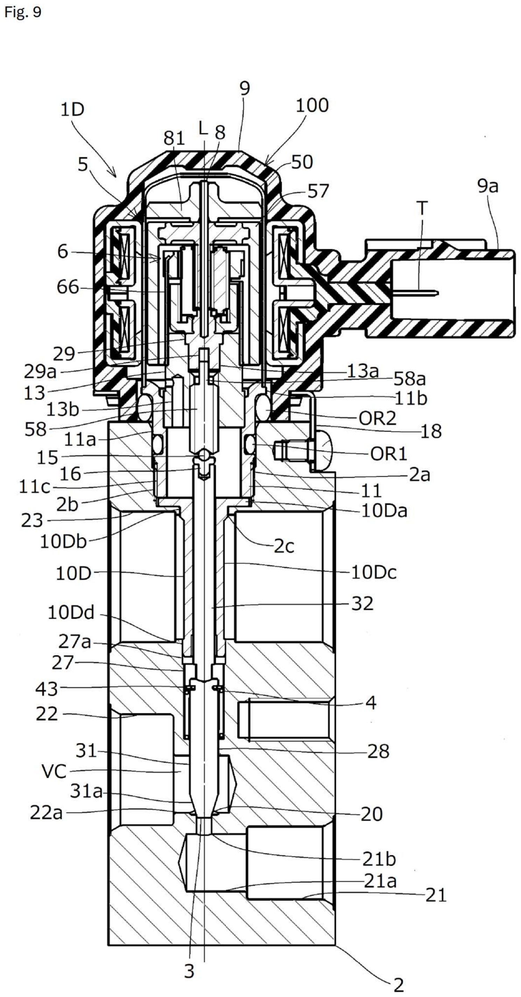

FIG. 9 is a vertical cross-sectional view of an electrically driven valve 1D according to a fifth embodiment in a valve closed state. According to the present embodiment, only a sleeve 10D differs from the first embodiment, and other components are similar, such that they are denoted with the same reference numbers, and descriptions thereof are omitted.

The sleeve 10D has an outer circumference surface shape that differs from the first embodiment. More specifically, an upper large diameter portion 10Da of the sleeve 10D has a disk shape having a thin thickness, and an outer diameter thereof is slightly smaller than an inner diameter of a lower end of the recessed portion 2a. In the sleeve 10D, a medium diameter portion 10Db, a small-diameter portion 10Dc, a lower large diameter portion 10Dd, and the inner circumference surface are similar to the first embodiment.

When the sleeve 10D is assembled to the valve main body 2, the lower surface of the upper large diameter portion 10Da abuts against an upper surface of the bottom wall of the recessed portion 2a, and a lower end of the main body 11a of the holder 11 abuts against an upper surface of the upper large diameter portion 10Da across the entire circumference. By engaging the male screw 11c to the female screw 2b, the holder 11 is displaced downward, and by having the lower end of the main body 11a press the upper large diameter portion 10Da toward the bottom wall of the recessed portion 2a, the sleeve 10D may be attached to the valve main body 2. Thereby, the wedge effect acting on the first outer circumference surface 10e (FIG. 4) and the through hole 2c is enhanced.

The present invention is not limited to the embodiments described above. Modifications of arbitrary components in the embodiments descried above may be possible within the scope of the present invention. Further, addition or omission of an arbitrary component in the embodiments described above is enabled. For example, an example adopting a planetary gear mechanism as the deceleration mechanism has been illustrated, but the present invention is not limited thereto, and alternatively, a gear set may be adopted.

The present specification includes the following disclosures of the present invention.

### (First Aspect)

An electrically driven valve including:
a valve main body including a first flow passage through which a refrigerant is introduced, a second flow passage through which the refrigerant is flown out, a third flow passage through which the refrigerant is passed, and a valve seat formed between the first flow passage and the second flow passage;
a valve shaft unit including a valve element portion configured to be seated on the valve seat;
a motor disposed on the valve main body; and
a conversion mechanism configured to convert a rotation of a rotor of the motor into a linear movement and to transmit the same to the valve shaft unit,
wherein the valve main body includes an insertion hole configured to connect the second flow passage and the third flow passage and to which the valve shaft unit is inserted,
wherein communication between the third flow passage and the second flow passage is shut off by arranging a sleeve having a tubular shape in the insertion hole, and
wherein the valve shaft unit is arranged in a displaceable manner in an axial direction on an inner side of the sleeve.

### (Second Aspect)

The electrically driven valve according to the first aspect,
wherein the valve seat is arranged on an opposite side with respect to the motor interposing the third flow passage,
wherein the electrically driven valve includes a rotor of the motor, a deceleration mechanism configured to decelerate a rotation of the rotor of the motor, the conversion mechanism configured to convert a rotation having been decelerated by the deceleration mechanism into a linear movement, and a can configured to accommodate at least the deceleration mechanism, and
wherein an interior of the can is communicated with the second flow passage through a space between the sleeve and the valve shaft unit.

### (Third Aspect)

The electrically driven valve according to the first aspect or the second aspect,
wherein the valve shaft unit is configured slidably along an inner circumference surface of the sleeve, and
wherein a groove or a concave-convex through which refrigerant may pass is formed on either one of an inner circumference surface of the sleeve and an outer circumference surface of the valve shaft unit.

### (Fourth Aspect)

The electrically driven valve according to any one of the first to third aspects,
wherein the valve seat is arranged on an opposite side with respect to the motor interposing the third flow passage,
wherein one end side of the sleeve is press-fit to the insertion hole, and
wherein the other end side of the sleeve is press-fit to a through hole, the through hole being configured to connect a recessed portion for attaching the motor and the third flow passage.

### (Fifth Aspect)

The electrically driven valve according to the fourth aspect, wherein a tapered surface configured to reduce in diameter toward the one end side is formed on the other end side of the sleeve, and by pressing the sleeve toward the one end side, the tapered surface is caused to dig to an inner circumference of the through hole.

### (Sixth Aspect)

The electrically driven valve according to the fifth aspect,
wherein an inner diameter of the one end side of the sleeve is greater than an inner diameter of the other end side of the sleeve.

### (Seventh aspect)

The electrically driven valve according to the first to third aspects,
wherein the valve seat is arranged on an opposite side with respect to the motor interposing the third flow passage,
wherein a space between the sleeve and the insertion hole is sealed by a sealing member arranged in a first circumferential groove formed on one end side of the sleeve, and
wherein a space between the sleeve and a through hole is sealed by a sealing member arranged in a second circumferential groove formed on the other end side of the sleeve, the through hole being configured to connect a recessed portion for attaching the motor and the third flow passage.

### (Eighth Aspect)

The electrically driven valve according to the first to third aspects,
wherein the valve seat is arranged on an opposite side with respect to the motor interposing the third flow passage,
wherein the electrically driven valve includes a rotor of the motor, a deceleration mechanism configured to decelerate a rotation of the rotor of the motor, the conversion mechanism configured to convert a rotation having been decelerated by the deceleration mechanism into a linear movement, a can configured to accommodate at least the deceleration mechanism, a holder configured to fix the can to the valve main body, and an elastic body arranged between the holder and the sleeve, and
wherein the elastic body is configured to urge the sleeve toward a direction separating from the holder.

### (Ninth Aspect)

The electrically driven valve according to the eighth aspect,
wherein one end side of the sleeve is press-fit to the insertion hole, and
wherein the other end side of the sleeve is press-fit to a through hole, the through hole being configured to connect a recessed portion for attaching the motor and the third flow passage.

### (Tenth Aspect)

The electrically driven valve according to any one of first to third aspects,
wherein the valve seat is arranged on an opposite side with respect to the motor interposing the third flow passage,
wherein the electrically driven valve includes a rotor of the motor, a deceleration mechanism configured to decelerate a rotation of the rotor of the motor, the conversion mechanism configured to convert a rotation having been decelerated by the deceleration mechanism into a linear movement, a can configured to accommodate at least the deceleration mechanism, and a holder configured to fix the can to the valve main body, and
wherein the sleeve is nipped between the holder and the valve main body.

### (Eleventh Aspect)

The electrically driven valve according to the tenth aspect,
wherein one end side of the sleeve is press-fit to the insertion hole, and
wherein the other end side of the sleeve is press-fit to a through hole, the through hole being configured to connect a recessed portion for attaching the motor and the third flow passage.

### [Reference Signs List]

- 1, 1A, 1B, 1C, 1D:: electrically driven valve
- 2:: valve main body
- 3:: valve shaft unit
- 31:: lower valve shaft
- 32:: upper valve shaft
- 31a:: valve element portion
- 4:: coil spring
- 5:: stepping motor
- 6:: deceleration mechanism
- 10:: sleeve
- 12:: compression coil spring
- 20:: valve seat
- 21:: first flow passage
- 22:: second flow passage
- 23:: return flow passage (third flow passage)
- 27:: annular hole portion
- 50:: can
- 55:: stator
- 57:: rotor
- 100:: motor unit
- VC:: valve chamber

## Claims

1. An electrically driven valve comprising:
a valve main body including a first flow passage through which a refrigerant is introduced, a second flow passage through which the refrigerant is flown out, a third flow passage through which the refrigerant is passed, and a valve seat formed between the first flow passage and the second flow passage;
a valve shaft unit including a valve element portion configured to be seated on the valve seat;
a motor disposed on the valve main body; and
a conversion mechanism configured to convert a rotation of a rotor of the motor into a linear movement and to transmit the same to the valve shaft unit,
wherein the valve main body includes an insertion hole configured to connect the second flow passage and the third flow passage and to which the valve shaft unit is inserted,
wherein communication between the third flow passage and the second flow passage is shut off by arranging a sleeve having a tubular shape in the insertion hole, and
wherein the valve shaft unit is arranged in a displaceable manner in an axial direction on an inner side of the sleeve.

2. The electrically driven valve according to claim 1,
wherein the valve seat is arranged on an opposite side with respect to the motor interposing the third flow passage,
wherein the electrically driven valve includes a rotor of the motor, a deceleration mechanism configured to decelerate a rotation of the rotor of the motor, the conversion mechanism configured to convert a rotation having been decelerated by the deceleration mechanism into a linear movement, and a can configured to accommodate at least the deceleration mechanism, and
wherein an interior of the can is communicated with the second flow passage through a space between the sleeve and the valve shaft unit.

3. The electrically driven valve according to claim 2,
wherein the valve shaft unit is configured slidably along an inner circumference surface of the sleeve, and
wherein a groove or a concave-convex through which refrigerant may pass is formed on either one of an inner circumference surface of the sleeve and an outer circumference surface of the valve shaft unit.

4. The electrically driven valve according to claim 1,
wherein the valve seat is arranged on an opposite side with respect to the motor interposing the third flow passage,
wherein one end side of the sleeve is press-fit to the insertion hole, and
wherein the other end side of the sleeve is press-fit to a through hole, the through hole being configured to connect a recessed portion for attaching the motor and the third flow passage.

5. The electrically driven valve according to claim 4,
wherein a tapered surface configured to reduce in diameter toward the one end side is formed on the other end side of the sleeve, and by pressing the sleeve toward the one end side, the tapered surface is caused to dig to an inner circumference of the through hole.

6. The electrically driven valve according to claim 5,
wherein an inner diameter of the one end side of the sleeve is greater than an inner diameter of the other end side of the sleeve.

7. The electrically driven valve according to claim 1,
wherein the valve seat is arranged on an opposite side with respect to the motor interposing the third flow passage,
wherein a space between the sleeve and the insertion hole is sealed by a sealing member arranged in a first circumferential groove formed on one end side of the sleeve, and
wherein a space between the sleeve and a through hole is sealed by a sealing member arranged in a second circumferential groove formed on the other end side of the sleeve, the through hole being configured to connect a recessed portion for attaching the motor and the third flow passage.

8. The electrically driven valve according to claim 1,
wherein the valve seat is arranged on an opposite side with respect to the motor interposing the third flow passage,
wherein the electrically driven valve includes a rotor of the motor, a deceleration mechanism configured to decelerate a rotation of the rotor of the motor, the conversion mechanism configured to convert a rotation having been decelerated by the deceleration mechanism into a linear movement, a can configured to accommodate at least the deceleration mechanism, a holder configured to fix the can to the valve main body, and an elastic body arranged between the holder and the sleeve, and
wherein the elastic body is configured to urge the sleeve toward a direction separating from the holder.

9. The electrically driven valve according to claim 8,
wherein one end side of the sleeve is press-fit to the insertion hole, and
wherein the other end side of the sleeve is press-fit to a through hole, the through hole being configured to connect a recessed portion for attaching the motor and the third flow passage.

10. The electrically driven valve according to claim 1,
wherein the valve seat is arranged on an opposite side with respect to the motor interposing the third flow passage,
wherein the electrically driven valve includes a rotor of the motor, a deceleration mechanism configured to decelerate a rotation of the rotor of the motor, the conversion mechanism configured to convert a rotation having been decelerated by the deceleration mechanism into a linear movement, a can configured to accommodate at least the deceleration mechanism, and a holder configured to fix the can to the valve main body, and
wherein the sleeve is nipped between the holder and the valve main body.

11. The electrically driven valve according to claim 10,
wherein one end side of the sleeve is press-fit to the insertion hole, and
wherein the other end side of the sleeve is press-fit to a through hole, the through hole being configured to connect a recessed portion for attaching the motor and the third flow passage.
